# EUROPÄISCHE PATENTANMELDUNG

(11) **EP 4 123 764 A1**
(43) Veröffentlichungstag der Anmeldung: **25.01.2023**
(21) Anmeldenummer: 22186058.8
(22) Anmeldetag: 20.07.2022
(51) Int. Cl.: H01M 8/0273, H01M 8/0286, H01M 8/1004, B65G 1/133

(54) **VORRICHTUNG UND VERFAHREN ZUR VERARBEITUNG EINER MEMBRAN-ELEKTRODEN-ANORDNUNG**

(30) Priorität: 20.07.2021 DE 102021118683
(71) Anmelder: MÜHLBAUER GMBH & CO. KG, 93426 Roding (DE)
(72) Erfinder: Hochmann, Sven, 01259 Dresden (DE)
(74) Vertreter: Schmidt, Steffen J.

(57) **Zusammenfassung**

Eine Vorrichtung zur Verarbeitung einer Membran-Elektroden-Anordnung, MEA, umfasst zumindest eine Bereitstellungsvorrichtung, die zur Bereitstellung und/oder zum Transport von MEA-Aufnahmeelementen eingerichtet ist, wobei die MEA-Aufnahmeelemente jeweils zur Aufnahme einer MEA eingerichtet sind. Weiter umfasst die Vorrichtung zumindest eine MEA-Zuführungsvorrichtung, die dazu eingerichtet ist, jeweils eine MEA in oder auf einem MEA-Aufnahmeelement anzuordnen. Zumindest ein Magazin, zum Beispiel ein Stapel- oder Fächermagazin, ist zur Aufnahme der MEA-Aufnahmeelemente mit den darin oder darauf angeordneten MEA eingerichtet. Weiter umfasst die Vorrichtung eine Aushärtungsvorrichtung, die dazu eingerichtet ist, das zumindest eine Magazin zumindest teilweise aufzunehmen und die in oder auf den MEA-Aufnahmeelementen angeordneten MEA auszuhärten.

## Beschreibung

### Hintergrund

Hier werden ein Verfahren und eine Vorrichtung zur Verarbeitung einer Membran-Elektroden-Anordnung - MEA -, zum Beispiel einer Membran-Elektroden-Anordnung für eine Brennstoffzelle, beschrieben.

### Stand der Technik

Zur Herstellung einer Membran-Elektroden-Anordnung für eine Brennstoffzelle sind sog. Pick-and-Place-Verfahren bekannt. Hierbei werden Roboter oder auf Schienen bewegliche Greifer für Bewegungen in unterschiedlichen Raumrichtungen eingesetzt, um Komponenten der Membran-Elektroden-Anordnung mit der erforderlichen Genauigkeit relativ zu einander zu platzieren. Ein solches Pick-and-Place-Verfahren zum Herstellen von Membran-Elektroden-Anordnungen und Brennstoffzellen in der Großserie ist aufgrund der erforderlichen Handhabung der filigranen und empfindlichen Komponenten anspruchsvoll.

Weiter offenbart zum Beispiel das Dokument DE 10 2015 010 440 A1, einen Träger für eine Membran und/oder eine Elektrode als Teil einer durchgängigen Materialbahn bereitzustellen. Alternativ kann auch eine Membran und/oder eine Elektrode als fortlaufende Materialbahn bereitgestellt werden. Die Materialbahn kann hierbei eine Mehrzahl von Bearbeitungsstationen durchlaufen, wobei zumindest eine zweite Komponente der Membran-Elektroden-Anordnung mit der Materialbahn verbunden wird.

Weitere Membran-Elektroden-Anordnungen sowie zugehörige Fertigungsverfahren offenbaren die Dokumente DE 10 2010 049 548 A1, DE 10 2010 054 199 A1, DE 10 2010 049 548 A1 und DE 10 2011 105 180 A1.

Ein Nachteil bekannter Fertigungsverfahren für Membran-Elektroden-Anordnungen mit zumindest zunächst durchgängigen Materialbahnen und/oder für Membran-Elektroden-Anordnungen, die im Pick-and-Place Verfahren hergestellt werden, ist, dass die Komponenten der Membran-Elektroden-Anordnungen, zum Beispiel Trägerrahmen, Gasdiffusionsschichten und katalysatorbeschichtete Membranen, üblicherweise zunächst mit einem Klebstoff aneinander oder aufeinander fixiert werden, wobei der Klebstoff anschließend aushärten muss. Obwohl Druck und Hitze das Aushärten des Klebstoffs zwischen den Komponenten oder Schichten und/oder die Fixierung von Schichten aneinander beschleunigen können, ist der Aushärteprozess zeitaufwendiger als die vorangehenden Fertigungsschritte für Membran-Elektroden-Anordnungen, insbesondere zeitaufwendiger als die Fertigungsschritte für Membran-Elektroden-Anordnungen mit zumindest zunächst durchgängigen Materialbahnen. Die Verarbeitungskapazität und/oder die Verarbeitungsgeschwindigkeit einer Fertigungsstation zur Aushärtung des Klebstoffs, der die MEA-Komponenten aneinander fixiert, stellt somit einen Flaschenhals, sowohl für eine Produktionskapazität als auch für eine Produktionsgeschwindigkeit einer Vorrichtung zur Herstellung einer Membran-Elektroden-Anordnung, dar.

### Zu lösende Aufgabe

Es besteht somit ein Bedarf an einer verbesserten Vorrichtung und an einem verbesserten Verfahren zur Herstellung einer Membran-Elektroden-Anordnung, die insbesondere eine Produktionskapazität und/oder eine Produktionsgeschwindigkeit für eine Membran-Elektroden-Anordnung erhöhen. Insbesondere soll eine Produktionskapazität und/oder eine Produktionsgeschwindigkeit einer Aushärtungsstation oder Aushärtungsvorrichtung für vorgefertigte MEA, insbesondere für vorgefertigte MEA mit einem noch nicht vollständig ausgehärteten Klebstoff, erhöht werden.

### Lösung

Diese Aufgabe wird durch eine Vorrichtung nach dem Anspruch 1 sowie durch ein Verfahren nach dem unabhängigen Verfahrensanspruch gelöst. Ausgestaltungen dieser Lösung werden durch die auf diese Ansprüche zurückbezogenen Ansprüche definiert.

Eine Vorrichtung zur Verarbeitung einer Membran-Elektroden-Anordnung, MEA, umfasst zumindest eine Bereitstellungsvorrichtung, die zur Bereitstellung und/oder zum Transport von MEA-Aufnahmeelementen eingerichtet ist, wobei die MEA-Aufnahmeelemente jeweils zur Aufnahme einer MEA eingerichtet sind. Weiter umfasst die Vorrichtung zumindest eine MEA-Zuführungsvorrichtung, die dazu eingerichtet ist, jeweils eine MEA in oder auf einem MEA-Aufnahmeelement anzuordnen. Zumindest ein Magazin, zum Beispiel ein Stapel- oder Fächermagazin, ist zur Aufnahme der MEA-Aufnahmeelemente mit den darin oder darauf angeordneten MEA eingerichtet. Weiter umfasst die Vorrichtung eine Aushärtungsvorrichtung, die dazu eingerichtet ist, das zumindest eine Magazin zumindest teilweise aufzunehmen und die in oder auf den MEA-Aufnahmeelementen angeordneten MEA auszuhärten.

Ein Vorteil hierbei ist, dass die jeweiligen MEA, welche insbesondere vorgefertigte MEA mit zumindest noch nicht vollständig ausgehärteten Klebstoffen und/oder Klebstoffschichten oder Klebstoffaufträgen sind, zunächst in ein Magazin, zum Beispiel in ein Stapel- oder Fächermagazin, aufgenommen werden und dann in diesem Magazin gesammelt von der Aushärtungsvorrichtung weiterverarbeitet, insbesondere ausgehärtet, werden können. Auch unter dem Einfluss von Druck und Wärme bzw. Temperatur beansprucht der Vorgang des Klebstoffaushärtens eine bestimmte, nur bedingt verkürzbare, Zeitdauer und stellt somit einen Flaschenhals bei der Produktion von MEA mit mehreren miteinander verklebten Komponenten oder Schichten dar.

Die noch nicht ausgehärteten MEA sind zunächst in einem Magazin, zum Beispiel in einem Stapel- oder Fächermagazin, zu sammeln und anschließend in diesem Magazin auszuhärten, wobei das Magazin hierzu zumindest teilweise in die Aushärtungsvorrichtung eingebracht wird. Diese Vorgehensweise erlaubt mit einer Aushärtungsvorrichtung jeweils mehrere MEA gleichzeitig zu verarbeiten und/ oder auszuhärten. Sowohl eine Verarbeitungskapazität als auch eine Verarbeitungsgeschwindigkeit der Aushärtungsvorrichtung und somit auch der gesamten Fertigungsanordnung zur Herstellung von MEA können so erheblich gesteigert werden.

In einer ersten Variante kann das Magazin insbesondere ein Fächermagazin sein, das mehrere um eine gemeinsame Rotationsachse schwenkbare MEA-Aufnahmeelemente umfasst, die jeweils dazu eingerichtet sind, jeweils zumindest eine MEA aufzunehmen. In dieser Variante kann das Magazin oder Fächermagazin weiter dazu eingerichtet sein, eine von einem schwenkbaren MEA-Aufnahmeelement aufgenommene MEA jeweils mit einem weiteren schwenkbaren MEA-Aufnahmeelement in Anlage zu bringen, sodass die MEA zwischen zwei um eine gemeinsame Rotationsachse schwenkbaren MEA-Aufnahmeelementen angeordnet ist.

Mit anderen Worten kann eine Vorrichtung zur Verarbeitung einer Membran-Elektroden-Anordnung, MEA, mehrere um eine gemeinsame Rotationsachse schwenkbare oder rotierbare MEA-Aufnahmeelemente umfassen. Zumindest eine MEA-Zuführungsvorrichtung kann dazu eingerichtet sein, jeweils eine MEA in oder auf einem MEA-Aufnahmeelement anzuordnen, wobei die Vorrichtung weiter dazu eingerichtet sein kann, eine von einem schwenkbaren MEA-Aufnahmeelement aufgenommene MEA jeweils mit einem weiteren schwenkbaren MEA-Aufnahmeelement in Anlage zu bringen, sodass die MEA zwischen zwei um eine gemeinsame Rotationsachse schwenkbaren MEA-Aufnahmeelementen angeordnet ist.

Die schwenkbaren oder rotierbaren Aufnahmeelemente können an einem Zentralelement angeordnet sein, welches insbesondere zur schwenkbaren und/oder rotierbaren Lagerung oder Aufnahme der MEA-Aufnahmeelemente eingerichtet sein kann.

In dem Fächermagazin mit schwenkbaren oder rotierbaren MEA-Aufnahmeelementen können die zu verarbeitenden, insbesondere auszuhärtenden, MEA sehr zeit- und raumeffizient angeordnet werden können, wobei zumindest ein Teil der MEA-Aufnahmeelemente jeweils sowohl zur Aufnahme für eine MEA als auch als Anpresselement für eine jeweils weitere MEA dienen können. Das Fächermagazin kann als Ganzes bewegt und zumindest teilweise in der Aushärtungsvorrichtung angeordnet werden.

Ein weiterer Vorteil des Fächermagazins mit schwenkbaren oder rotierbaren MEA-Aufnahmeelementen ist, dass ein auf ein, insbesondere auf ein äußerstes, Aufnahmeelement ausgeübter Anpressdruck auf die jeweils in Anlage gebrachten und/oder nächstliegenden MEA und/ oder MEA-Aufnahmeelemente übertragen werden kann. Ein solcher Anpressdruck kann durch die Aushärtungsvorrichtung und/oder durch eine gesonderte Anpressvorrichtung auf eines der MEA-Aufnahmeelemente übertragen werden.

In einer Variante können die MEA-Aufnahmeelemente des Fächermagazins jeweils vollständig, d.h. um bis zu 360° und/oder um ein Vielfaches hiervon, um die gemeinsame Rotationsachse geschwenkt oder rotiert werden.

Optional kann das Fächermagazin weiter dazu eingerichtet sein, insbesondere mit den auf den MEA-Aufnahmeelementen angeordneten MEA, zumindest im Wesentlichen eine Stapelanordnung auszubilden, bei der die MEA-Aufnahmeelemente des Fächermagazins jeweils zumindest nahezu parallel zueinander angeordnet sind. Ermöglicht wird dies dadurch, dass die auszuhärtenden MEA zumindest in einigen Ausführungsformen nur eine sehr geringe Dicke aufweisen, nämlich wenige µm, zum Beispiel 100 µm bis 500 µm, insbesondere 150µm bis 250 µm. Die jeweiligen MEA-Aufnahmeelemente können daher jeweils in eine zueinander zumindest nahezu parallele Stellung rotiert werden, ohne dass die auf den MEA-Aufnahmeelementen angeordneten MEA eine zumindest im Wesentlichen winklige Anordnung der MEA-Aufnahmeelemente erzwingen würden. Ein Vorteil hierbei ist, dass ein zumindest im Wesentlichen lotrecht auf ein äußerstes der MEA-Aufnahmeelemente ausgeübter (Anpress-)Druck zumindest im Wesentlichen auch lotrecht auf die jeweils weiteren MEA-Aufnahmeelemente übertragen werden kann, insbesondere ohne dass hierbei eine wesentliche Hebelkraft auf die Lagerung der MEA-Aufnahmeelemente, zum Beispiel auf das Zentralelement, ausgeübt wird.

In einer anderen Variante kann das Magazin ein Stapelmagazin sein, welches zu einem Zusammenwirken mit der Aushärtungsvorrichtung eingerichtet ist. Das Stapelmagazin kann dazu eingerichtet sein, die MEA- Aufnahmeelemente jeweils zueinander beabstandet aufzunehmen und/oder anzuordnen. Die Aushärtungsvorrichtung kann Anpressplatten oder Anpresselemente aufweisen, die dazu eingerichtet sind, zumindest teilweise mit auf oder in den MEA-Aufnahmeelementen des Stapelmagazins angeordneten MEA in Anlage gebracht zu werden und/oder an die auf oder in den MEA-Aufnahmeelementen des Stapelmagazins angeordneten MEA angepresst zu werden.

Die Aushärtungsvorrichtung kann mehrere, optional beheizbare Anpressplatten aufweisen, die jeweils dazu angeordnet und eingerichtet sind, mit einem MEA-Aufnahmeelement des Stapelmagazins und/oder mit einer darauf angeordneten MEA zumindest teilweise in Anlage oder in Kontakt gebracht zu werden. Das Stapelmagazin kann die mehreren MEA-Aufnahmeelemente aufnehmen oder anordnen, wobei die Anordnung der MEA-Aufnahmeelemente mit den Anpressplatten der Aushärtungsvorrichtung in Anlage bringbar und/oder in Eingriff zu bringen sein kann.

Die MEA-Aufnahmeelemente können zumindest eine MEA-Trägerbox umfassen. Alternativ oder ergänzend können die MEA-Aufnahmeelemente auch zumindest eine MEA-Trägerplatte, insbesondere eine Bipolarplatte, umfassen. Weiter können die MEA-Aufnahmeelemente auch zumindest ein umlaufendes Förderband und/oder zumindest einen Förderbandantrieb umfassen. In einer Ausführungsform ist für jedes der MEA-Aufnahmeelemente ein umlaufendes Förderband mit einem Förderbandantrieb vorgesehen.

In einigen Varianten können die Trägerboxen, Bipolarplatten und/oder Förderbänder die jeweiligen MEA-Aufnahmeelemente auch ausbilden. In einer weiteren Variante können MEA-Aufnahmeelemente jeweils ein, insbesondere umlaufendes, Förderband und eine Gegenpressplatte aufweisen oder aus diesen gebildet sein. Ein Vorteil der Verwendung von Gegenpressplatten ist, dass ein verbesserter Anpressdruck auf eine MEA, die zwischen einer Anpressplatte der Aushärtungsvorrichtung und einem umlaufenden Förderband des MEA-Aufnahmeelements/Stapelmagazins angeordnet ist, ausgeübt werden kann.

Das zumindest eine Stapelmagazin kann einen Förderbandantrieb umfassen, der zum Antrieb von umlaufenden Förderbändern verschiedener MEA-Aufnahmeelemente eingerichtet ist. Weiter kann das Stapelmagazin einen Verfahrmechanismus umfassen und/oder mit einem Verfahrmechanismus gekoppelt sein. Der Verfahrmechanismus kann dazu eingerichtet sein, das Stapelmagazin relativ zu der MEA-Zuführungsvorrichtung und/oder relativ zu der Aushärtungsvorrichtung zu bewegen.

Ein Vorteil des Verfahrmechanismus ist, dass das Stapelmagazin in einer ersten Position, zum Beispiel durch die Bereitstellungsvorrichtung oder eine mit der Bereitstellungsvorrichtung gekoppelte weitere Vorrichtung, mit den MEA-Aufnahmeelementen befüllt oder bestückt werden kann. Hierbei können jeweils eine oder mehrere MEA in oder auf den MEA-Aufnahmeelementen angeordnet sein. Anschließend kann der Verfahrmechanismus das Stapelmagazin in eine zweite Position bewegen, in der das Stapelmagazin mit der Aushärtungsvorrichtung zusammenwirkt. Hierzu kann der Verfahrmechanismus das Stapelmagazin auch zumindest teilweise in die Aushärtungsvorrichtung einführen und/oder in der Aushärtungsvorrichtung anordnen. Die Bereitstellungsvorrichtung oder eine mit der Bereitstellungsvorrichtung gekoppelte weitere Vorrichtung kann mit dem Bestücken eines weiteren Stapelmagazins fortfahren, insbesondere während die Aushärtungsvorrichtung die MEA, welche auf oder in den MEA-Aufnahmeelementen des zumindest teilweise in der Aushärtungsvorrichtung angeordneten Stapelmagazins angeordnet sind, gleichzeitig und/oder gesammelt aushärtet. Die Verarbeitungskapazität der Aushärtungsvorrichtung kann so gegenüber bekannten Vorrichtungen erheblich gesteigert werden, sodass die für die Klebstoffaushärtung von (teil-)gefertigten MEA benötigte minimale Zeitdauer nicht die Verarbeitungsgeschwindigkeit einer ganzen Fertigungsanlage für MEA limitiert. Mit anderen Worten ermöglicht die Aushärtung von MEA, welche in einem Magazin aufgenommen und/oder gesammelt sind, die Beseitigung eines Flaschenhalses im Produktionsablauf.

Optional kann die Aushärtungsvorrichtung dazu eingerichtet sein, die MEA zu erhitzen und/ oder einen Anpressdruck auf die MEA auszuüben. Die Aushärtungsvorrichtung kann hierzu mehrere, insbesondere beheizbare Anpressplatten oder Anpresselemente aufweisen, die jeweils dazu angeordnet und ausgebildet sind, mit einem MEA-Aufnahmeelement des Stapelmagazins und/oder mit einer darauf angeordneten MEA zumindest teilweise in Anlage oder in Kontakt gebracht zu werden. Der auf die MEA auszuübende Anpressdruck kann durch eine Relativbewegung des (Stapel-)Magazins und/oder einzelner MEA-Aufnahmeelemente relativ zu den Anpressplatten oder Anpresselementen der Aushärtungsvorrichtung geschehen, sodass die MEA einerseits an die MEA-Aufnahmeelemente des Magazins und andererseits an die Anpressplatten oder Anpresselemente der Aushärtungsvorrichtung angepresst werden. Optional kann der Verfahrmechanismus das (Stapel-)Magazin relativ zur Aushärtungsvorrichtung und/oder zu den Anpressplatten oder Anpresselementen bewegen.

In einer Variante können die Aushärtungsvorrichtung und/oder die Anpressplatten oder Anpresselemente der Aushärtungsvorrichtung, zum Beispiel mit einem weiteren Verfahrmechanismus, relativ zu dem (Stapel-)Magazin bewegt werden, sodass die MEA einerseits an die MEA-Aufnahmeelemente des Magazins und andererseits an die Anpressplatten oder Anpresselemente der Aushärtungsvorrichtung angepresst werden.

In einer Variante können die MEA-Aufnahmeelemente weiter jeweils eine Isolationslage aufweisen. Die Isolationslage kann fest oder löslich an oder in den MEA-Aufnahmeelementen angeordnet sein und insbesondere zu einem Kontakt mit den in oder an den MEA-Aufnahmeelementen angeordneten, insbesondere teilgefertigten, MEA eingerichtet sein. Die Isolationslage kann zu einer thermischen Isolation eingerichtet sein und/oder eine haftungsreduzierende Beschichtung aufweisen. Ein Vorteil einer haftungsreduzierenden Beschichtung ist, dass zum Beispiel ein während eines Anpressens einer MEA an eine Anpressplatte oder an ein Anpresselement der Aushärtungsvorrichtung auf die Isolationslage austretender Klebstoff leichter wieder entfernt werden kann.

Die zumindest eine MEA-Zuführungsvorrichtung kann ferner dazu eingerichtet sein, jeweils mehrere MEA in oder auf einem MEA-Aufnahmeelement anzuordnen und/oder jeweils eine Zwischenschicht zwischen zwei MEA in oder auf einem MEA-Aufnahmeelement anzuordnen. Die MEA-Aufnahmeelemente eines Magazins, insbesondere eines Stapel- oder Fächermagazins, können in einer Variante jeweils zur Aufnahme mehrerer (teil-)gefertigter, insbesondere noch nicht vollständig ausgehärteter, MEA eingerichtet sein, wobei optional eine Zwischenschicht zwischen den jeweils aufgenommenen MEA angeordnet sein kann. Ein Vorteil hierbei ist, dass die Verarbeitungskapazität der Aushärtungsvorrichtung weiter gesteigert werden kann. Ein Vorteil der Zwischenschicht oder der Zwischenschichten ist, dass ein unerwünschtes Verkleben und/oder Anhaften der jeweils in oder auf einem MEA-Aufnahmeelement angeordneten MEA aneinander oder aufeinander verhindert werden kann. Zudem kann während des Anpressens austretender Klebstoff durch die Zwischenschichten aufgenommen werden, was insbesondere ein Verschmutzen der jeweils weiteren MEA verhindern kann.

Ein Verfahren zur Verarbeitung einer Membran-Elektroden-Anordnung, MEA, umfasst zumindest die folgenden Schritte:
- Bereitstellen und/oder Transportieren von MEA-Aufnahmeelementen mit zumindest einer Bereitstellungsvorrichtung, wobei die MEA-Aufnahmeelemente jeweils zur Aufnahme einer MEA eingerichtet sind,
- Anordnen jeweils einer MEA in oder auf einem MEA-Aufnahmeelement mit zumindest einer MEA-Zuführungsvorrichtung;
- Aufnehmen der MEA-Aufnahmeelemente mit den darin oder darauf angeordneten MEA in zumindest ein Magazin; und
- zumindest teilweises Aufnehmen des Magazins in einer Aushärtungsvorrichtung und Aushärten der in oder auf den MEA-Aufnahmeelementen angeordneten MEA mit der Aushärtungsvorrichtung.

Optional kann das Verfahren weiter einen der folgenden Schritte umfassen:
- Verfahren oder Bewegen des Magazins relativ zu der Bereitstellungsvorrichtung und/oder relativ zu der Aushärtungsvorrichtung,
- Anordnen einer Isolationslage in oder auf zumindest einem der MEA-Aufnahmeelemente,
- Schwenken oder rotieren eines MEA-Aufnahmeelementes um eine gemeinsame Rotationsachse der MEA-Aufnahmeelemente,
- Ausüben eines Anpressdrucks auf zumindest eines der MEA-Aufnahmeelemente und/oder erhitzen der in den MEA-Aufnahmeelementen angeordneten MEA zur Aushärtung.

### Kurzbeschreibunq der Figuren

Weitere Merkmale, Eigenschaften, Vorteile und mögliche Abwandlungen werden für einen Fachmann anhand der nachstehenden Beschreibung deutlich, in der auf die beigefügten Zeichnungen Bezug genommen ist. Dabei zeigen die Figuren jeweils schematisch Beispiele für eine Membran-Elektroden-Anordnung und eine Fertigungsvorrichtung für eine Membran-Elektroden-Anordnung.
- Fig. 1: zeigt ein Beispiel für einen Trägerrahmen und für eine Membran-Elektroden-Anordnung, MEA.
- Fig. 2: zeigt ein Beispiel für einen Trägerrahmen für eine MEA mit einem darauf angeordneten Klebstoff.
- Fig. 3a: zeigt ein Beispiel für eine in einer Trägerbox angeordnete Membran-Elektroden-Anordnung.
- Fig. 3b: zeigt ein weiteres Beispiel für eine in einer Trägerbox angeordnete Membran-Elektroden-Anordnung.
- Fig. 4a: zeigt ein Beispiel für mehrere in einem Stapelmagazin angeordnete Trägerboxen.
- Fig. 4b: zeigt ein Beispiel für mehrere in einem Stapelmagazin angeordnete Bipolarplatten zur Aufnahme von Membran-Elektroden-Anordnungen.
- Fig. 5a: zeigt ein Beispiel für die Anordnung einer Membran-Elektroden-Anordnung in einem Fächermagazin.
- Fig. 5b: zeigt ein weiteres Beispiel für die Anordnung von Membran-Elektroden-Anordnungen in einem Fächermagazin.
- Fig. 6: zeigt ein Beispiel für eine Vorrichtung zur Herstellung einer Membran-Elektroden-Anordnung.
- Fig. 7: zeigt ein weiteres Beispiel für eine Vorrichtung zur Herstellung einer Membran-Elektroden-Anordnung.
- Fig. 8a: zeigt ein Beispiel für die Anordnung einer Membran-Elektroden-Anordnung in einem Stapelmagazin und ein Beispiel für die Anordnung eines Stapelmagazins in einer Aushärtungsvorrichtung.
- Fig. 8b: zeigt ein weiteres Beispiel für die Anordnung einer Membran-Elektroden-Anordnung in einem Stapelmagazin und ein Beispiel für die Anordnung eines Stapelmagazins in einer Aushärtungsvorrichtung.
- Fig. 9: zeigt ein weiteres Beispiel für eine Vorrichtung zur Herstellung einer Membran-Elektroden-Anordnung.
- Fig. 10: zeigt ein weiteres Beispiel für die Anordnung einer Membran-Elektroden-Anordnung in einem Stapelmagazin und ein Beispiel für die Anordnung eines Stapelmagazins in einer Aushärtungsvorrichtung.

### Detaillierte Beschreibung der Figuren

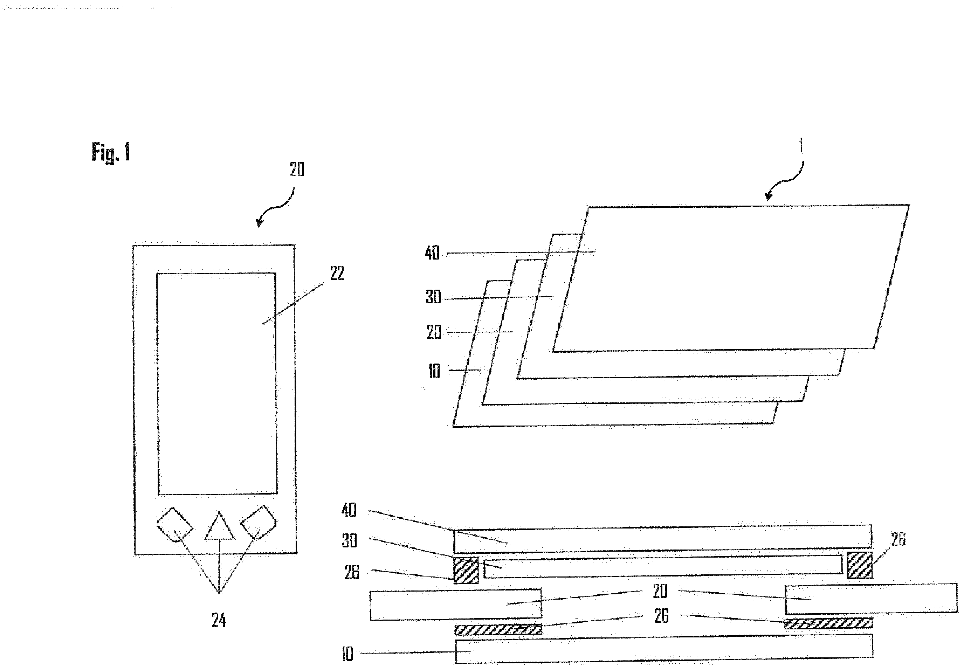

Sofern nicht explizit anders angegeben, sind übereinstimmende oder in ihrer Funktion vergleichbare Komponenten und Bestandteile in den schematischen Figuren 1 bis 10 mit übereinstimmenden Bezugszeichen versehen. Die Figuren sind explizit schematisch gezeichnet, insbesondere die Dicken und Abmessungen der MEA, Anpressplatten und Aufnahmeelemente sind nicht als maßstabsgetreue Fertigungsvorlagen zu verstehen, da diese Elemente tatsächlich eine Dicke von wenigen µm aufweisen und somit zeichnerisch kaum in einer maßstäblichen Querschnittsdarstellung wiedergegeben werden können. Auch die tatsächliche Formgebung der weiteren Elemente ist jeweils nur schematisch angedeutet.

Fig. 1 zeigt einen Trägerrahmen 20 für eine Membran-Elektroden-Anordnung 1. Der Trägerrahmen 20 weist eine erste Ausnehmung 22 und mehrere weitere Ausnehmungen 24 auf. Im gezeigten Beispiel ist der Trägerrahmen 20 bereits von einem mehrere Trägerrahmen umfassenden Bahnmaterial, nämlich einer Trägerbahn, separiert. Dieses ist zur Fertigung einer Membran-Elektroden-Anordnung, MEA, jedoch nicht zwingend notwendig. Vielmehr können alternativ auch mehrere Membran-Elektroden-Anordnungen auf einem fortlaufenden Träger-Bahnmaterial mit mehreren Trägerrahmen gefertigt und anschließend voneinander separiert werden.

Ferner zeigt die Fig. 1 schematisch ein Beispiel für den Aufbau einer Membran-Elektroden-Anordnung 1. Die Membran-Elektroden-Anordnung 1 umfasst den Trägerrahmen 20 mit der ersten Ausnehmung 22. Die erste Ausnehmung 22 ist hierbei von einem Klebstoffauftrag 26 umformt, der auf den Trägerrahmen 20 aufgetragen ist. Auf dem Trägerrahmen 20 mit dem Klebstoffauftrag 26 sind eine katalysatorbeschichtete Membran 30 sowie eine Gasdiffusionsschicht - GDL - 40 angeordnet. Im gezeigten Beispiel ist die Gasdiffusionsschicht 40 eine Kathode einer Membran-Elektroden-Anordnung 1. Auf der der Kathode 40 abgewandten Oberfläche des Trägerrahmens 20 sind ein weiterer Klebstoffauftrag 26 sowie eine weitere GDL 10, hier eine Anode, angeordnet. Die Kathode 40 und die Anode 10 sind im gezeigten Beispiel jeweils als Schichtelektrode ausgebildet. In anderen, nicht gezeigten Ausführungsbeispielen, kann die GDL 40 eine Anode ausbilden und die GDL 10 kann eine Kathode ausbilden. Mit anderen Worten können die Anode und die Kathode der gezeigten Anordnung ohne weitere strukturelle Änderung der Membran-Elektroden-Anordnung 1 miteinander vertauscht werden.

Ferner kann eine Membran-Elektroden-Anordnung 1 auch weniger als die in der Fig. 1 beispielhaft gezeigten Komponenten umfassen. Zum Beispiel sind auch Ausführungsformen mit nur zwei Komponenten, zum Beispiel mit einer GDL oder Elektrode und mit einer katalysatorbeschichtete Membran möglich (nicht gezeigt). Diese Anordnungen sind ebenso wie weitere nicht gezeigte (Teil-)Anordnungen, die insbesondere zu einem späteren Einsatz in einer Brennstoffzelle vorgesehen sind, Membran-Elektroden-Anordnung 1.

Wie in der Fig. 1 gezeigt, kann die katalysatorbeschichtete Membran 30 auf einer Oberfläche der Kathode /GDL 40 angeordnet sein, wobei sowohl die Kathode /GDL 40 als auch die Membran 30 auf dem Trägerrahmen 20 mit dem darauf aufgetragenen Klebstoffauftrag 26 angeordnet sind. In einer nicht gezeigten Alternative kann hierbei sowohl zumindest ein Teil der Membran 30 als auch ein Teil der Kathode /GDL 40 unmittelbar auf dem Klebstoffauftrag 26 angeordnet sein. Die Membran 30 kann durch die Anordnung der Kathode 40 auf dem Klebstoffauftrag zumindest teilweise durch die Kathode /GDL 40 und den Trägerrahmen 20 und/ oder durch den Klebstoffauftrag 26 umschlossen werden.

In einer nicht gezeigten Alternative ist die Membran 30 flächig größer als die erste Ausnehmung 22, aber flächig kleiner als die auf der Membran 30 angeordnete GDL. Optional kann der auf den Trägerrahmen 20 aufgetragene Klebstoffauftrag 26 hierbei so groß sein, dass sowohl die Membran 30 als auch die auf der Membran 30 angeordnete GDL durch den Klebstoff an dem Trägerrahmen fixiert/befestigt sind. Der Klebstoffauftrag 26, welcher zur Verbindung der Membran 30 und des Trägerrahmen 20 vorgesehen sein kann, kann hierbei die auf dem Trägerrahmen 20 angeordnete Membran 30, insbesondere seitlich, überragen.

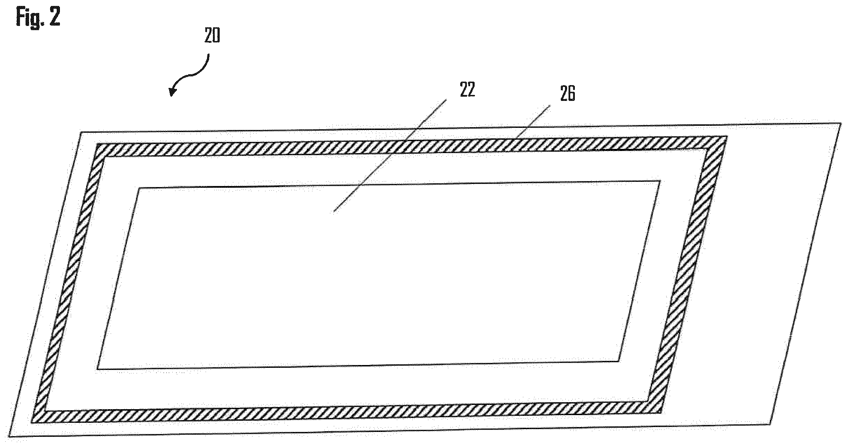

Die Fig. 2 zeigt ein Beispiel für einen Trägerrahmen 20 mit einer ersten Ausnehmung 22 und einem auf den Trägerrahmen 20 aufgetragenen Klebstoffauftrag 26, der die erste Ausnehmung 22 vollständig umformt, in einer schematisch-perspektivischen Ansicht. Optional kann der gezeigte Trägerrahmen auch weitere Ausnehmungen aufweisen, die in der Fig. 2 aus Übersichtsgründen jedoch nicht gezeigt sind. Der Klebstoffauftrag 26 ist zur Fixierung einer Membran oder Elektrode/GDL auf dem Trägerrahmen geeignet. Im gezeigten Beispiel ist der Klebstoff auf dem Trägerahmen 20 aufgetragen. Alternativ kann der Klebstoff in anderen Ausführungsformen aber auch auf eine Anode/GDL, Kathode /GDL oder Membran aufgetragen werden, und zur Fixierung einer jeweils weiteren Komponente, zum Beispiel zur Fixierung eines Trägerrahmens, dienen. Die gezeigte erste Ausnehmung 22 des Trägerrahmens 20 kann ebenso wie beliebige weitere (nicht gezeigte) Ausnehmungen des Trägerrahmens 20 zum Beispiel mit einem Stanzverfahren oder mit einem Fräsverfahren hergestellt werden.

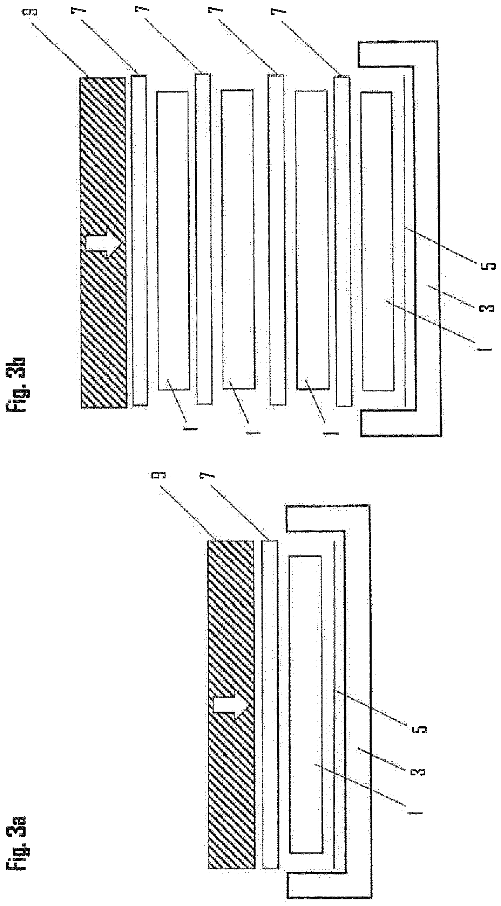

Fig. 3a zeigt schematisch eine Trägerbox 3 zur Aufnahme einer MEA 1. Zwischen der MEA 1 und der Trägerbox 3 ist eine Isolationslage 5 angeordnet. Die MEA 1 und die Isolationslage 5 werden durch die Trägerbox 3 aufgenommen. Die MEA 1 ist somit auf der Isolationslage 5 und auf der Trägerbox 3 angeordnet. Im in der Fig. 3a gezeigten Beispiel ist der Klebstoffauftrag der MEA 1 noch nicht ausgehärtet. Zum Aushärten des Klebstoffauftrags kann die MEA 1 erwärmt werden, während Sie durch die Trägerbox 3 aufgenommen ist. Das Aushärten wird dadurch unterstützt, dass mit einem Anpresselement 9, welches zum Beispiel eine Anpressplatte einer Trägervorrichtung oder ein Anpresselement einer gesonderten Anpressvorrichtung ist, ein Anpressdruck auf die MEA 1 in Richtung der Trägerbox 3 ausgeübt wird. Zwischen dem Anpresselement 9 und der auszuhärtenden MEA 1 ist eine Zwischenschicht 7 angeordnet, die ein Anhaften der MEA 1 an dem Anpresselement 9 verhindert.

Wie weiter in der Fig. 3b gezeigt, können auch mehrere MEA 1 durch eine Trägerbox 3 aufgenommen werden, wobei zwischen zwei MEA 1 jeweils eine Zwischenschicht 7 angeordnet ist, die ein Anhaften der MEA 1 aneinander verhindert. Das Anpresselement 9 kann einen Anpressdruck auf die MEA 1 ausüben. Der durch das Anpresselement 9 ausgeübte Anpressdruck in Richtung der Trägerbox 3 wird auf alle MEA übertragen.

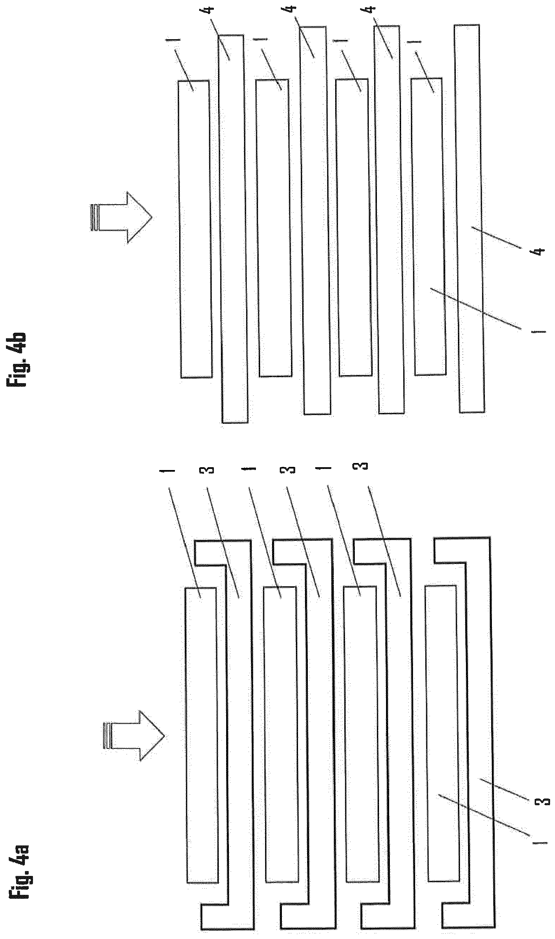

Fig. 4a zeigt, dass mehrere Trägerboxen 3 für eine MEA 1 übereinandergestapelt werden können, wobei optional auch hier ein Anpressdruck auf die jeweils in den Trägerboxen 3 aufgenommenen MEA 1 ausgeübt werden. Die Trägerboxen 3 sind im gezeigten Beispiel derart übereinander angeordnet, dass der auf eine äußerste MEA 1 ausgeübte Anpressdruck in Richtung der Trägerboxen auf die jeweils weiteren MEA 1 übertragen wird. Dieses ist jedoch nicht in allen Ausführungsformen notwendig. Alternativ zu der in der Fig. 4a gezeigten Anordnung können die Trägerboxen 3 zum Beispiel auch in einem Stapelmagazin aufgenommen werden, wie dieses zum Beispiel in den Fig.en 8a, 8b und 10 gezeigt ist.

Wie in der Fig. 4b gezeigt, können die auszuhärtenden MEA 1 auch auf Bipolarplatten 4 angeordnet werden, welches insbesondere eine gemeinsame Weiterverarbeitung der MEA 1 mit den Bipolarplatten 4 ermöglicht und/oder erleichtert. Die Bipolarplatten 4 können, wie in der Fig. 4b gezeigt, zur Aushärtung der MEA 1 übereinandergestapelt werden. Alternativ oder ergänzend können die Bipolarplatten 4 auch in ein Stapelmagazin aufgenommen werden oder einzeln weiterverarbeitet werden (nicht gezeigt). Auch auf die zur Aushärtung auf den Bipolarplatten 4 angeordneten MEA kann ein Anpressdruck ausgeübt werden.

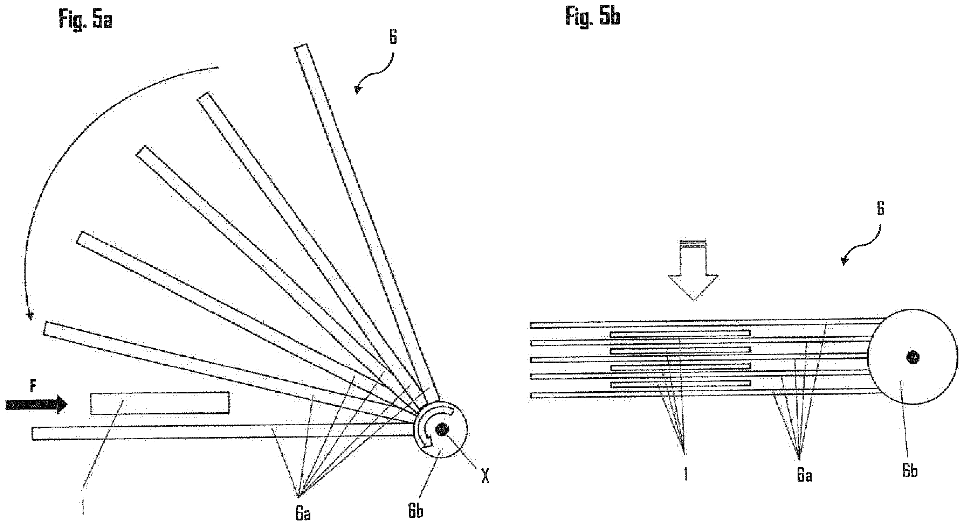

Fig. 5a zeigt ein Magazin 6 zur Aufnahme von MEA 1. Das gezeigte Magazin 6 ist ein Fächermagazin. Eine MEA-Zuführungsvorrichtung (nicht gezeigt) ist dazu eingerichtet, jeweils eine MEA 1 auf jeweils einem MEA-Aufnahmeelement 6a anzuordnen. Das gezeigte Magazin 6 umfasst hierbei mehrere MEA-Aufnahmeelemente 6a, die um eine gemeinsame Rotationsachse X schwenkbar oder rotierbar angeordnet sind. Die MEA-Aufnahmeelemente 6a sind hierbei schwenkbar oder rotierbar durch das Zentralelement 6b gelagert. Nach dem Anordnen einer oder mehrerer MEA 1 auf einem der MEA-Aufnahmeelement 6a kann ein jeweils weiteres MEA-Aufnahmeelement derart um die gemeinsame Rotationsachse X rotiert oder geschwenkt werden, dass es einerseits in Anlage mit der/den aufgenommen MEA 1 gerät und anderseits die Anordnung weiterer MEA durch die MEA-Zuführungsvorrichtung ermöglicht.

Wie schematisch in der Fig. 5b gezeigt, können die MEA-Aufnahmeelemente 6a hierdurch zumindest nahezu parallel zueinander angeordnet werden. Die auszuhärtenden MEA 1 weisen lediglich eine Dicke von wenigen µm, zum Beispiel 100 µm bis 500 µm, insbesondere 150µm bis 250 µm, auf und erzwingen somit keine im Wesentlichen winklige Anordnung der MEA-Aufnahmeelemente 6a zueinander. Vielmehr können die durch das Zentralelement 6b gelagerten MEA-Aufnahmeelemente 6a mit den auszuhärtenden MEA 1 jeweils nahezu parallel zueinander angeordnet werden. Wobei zumindest ein Teil der MEA-Aufnahmeelemente 6a an jeweils mehreren MEA 1 anliegt. Mit anderen Worten ist zumindest ein Teil der MEA-Aufnahmeelemente 6a derart angeordnet oder positioniert, dass sie jeweils mit einander gegenüberliegenden Oberflächen an einer MEA 1 anliegen. Ein auf ein äußerstes der MEA-Aufnahmeelemente 6a ausgeübter Anpressdruck kann somit auf alle auszuhärtenden MEA 1 übertragen werden, ohne dass hierbei wesentliche Hebelkräfte auf das die MEA-Aufnahmeelemente 6a lagernde Zentralelement 6b ausgeübt werden.

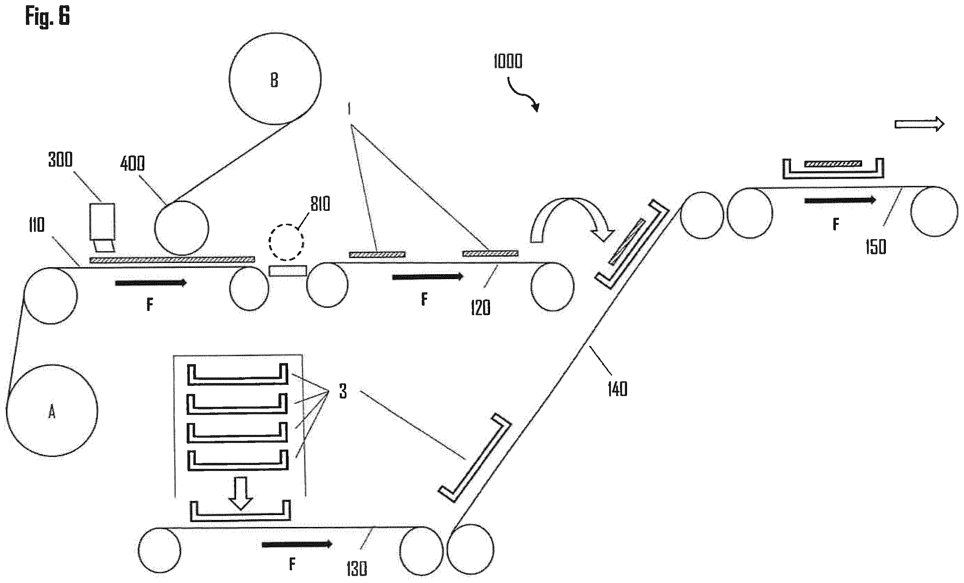

Die Fig. 6 zeigt ein Beispiel für eine Herstellungsanordnung 1000 für eine MEA 1 sowie für die Anordnung der hergestellten MEA 1 in Trägerboxen 3. Im gezeigten Beispiel wird eine erste MEA-Komponente A, welche zum Beispiel eine GDL und/oder eine beschichtete Membran und/oder eine Trägerbahn umfasst, als fortlaufendes quasi-unendliches Bahnmaterial bereitgestellt und von dem ersten Vakuumtransportband 110 kontinuierlich in der Förderrichtung F an verschiedenen Fertigungsstationen vorbei gefördert. Die Fertigungsstationen nehmen hierbei jeweils Verarbeitungsschritte zur Herstellung einer Membran-Elektroden-Anordnung vor und/oder stellen Fertigungskomponenten für diese bereit. Andere, nicht gezeigte Ausführungsformen, können auch lediglich eine einzige Fertigungsstation aufweisen.

Im gezeigten Beispiel wird ein Klebstoffauftrag auf die MEA-Komponente A aufgetragen, Hierzu umfasst die Herstellungsanordnung 1000 die Applikationsvorrichtung 300. Die kontinuierliche Förderung der MEA-Komponente A durch das erste Vakuumtransportband 110 wird während des Auftragens des Klebstoffs 26 nicht unterbrochen.

Weiter weist die gezeigte Herstellungsanordnung 1000 eine Vakuumtrommel 400 auf, die dazu eingerichtet ist, eine ebenfalls als fortlaufendes Bahnmaterial bereitgestellte MEA-Komponente B zu einer Übergabeposition zu fördern und an dieser Übergabeposition auf der MEA-Komponente A anzuordnen. Die MEA Komponente B kann ebenfalls eine GDL, eine beschichtete Membran und/oder eine Trägerbahn umfassen. Die Vakuumtrommel 400 ist im gezeigten Beispiel weiter dazu angeordnet und ausgebildet, die MEA-Komponente B an die MEA-Komponente A mit dem Klebstoff 26 anzupressen und gleichzeitig einen Unterdruck, mit dem die MEA-Komponente B zuvor an der Oberfläche der Vakuumtrommel 400 fixiert wurde, aufzuheben. Durch das Neutralisieren des Unterdrucks für die an der Übergabeposition positionierte MEA-Komponente B wird diese freigegeben und verbleibt auf der MEA-komponente A mit dem Klebstoff. Alternativ, und insbesondere wenn die MEA Komponente B eine Membran oder GDL ist, können anstelle einer Endlosbahn Einzellagen bzw. Einzelabschnitte übergeben werden. Die Vakuumtrommel wirkt in einer solchen Variante mit einer Schneidbaugruppe zusammen. Alternativ dazu werden die Einzellagen von einer Endlosträgerbahn abgespendet.

Die aufeinander angeordneten MEA-Komponenten A und B mit dem noch nicht ausgehärteten Klebstoff werden weiter in der Förderrichtung F durch das erste Vakuumtransportband 110 weitertransportiert. Im gezeigten Beispiel werden die MEA-Komponenten zu einer Schneidvorrichtung 810 gefördert, die dazu eingerichtet ist, die als Bahnmaterial bereitgestellten MEA-Komponenten in einzelne, noch nicht ausgehärteten MEA 1 zu zerschneiden. Es sei verstanden, dass in einer Variante wenigstens eine der MEA-Komponenten A und B als (Endlos-) Bahnmaterial bereitgestellt wird.

Die erste Schneidvorrichtung ist im gezeigten Beispiel ein Schneidzylinder 810, der mit einer Schneidauflage, hier einem Schneidtisch/Schneidamboss, zusammenwirkt, über den die MEA-Komponenten zum Zerschneiden geführt werden. Die MEA-Komponenten werden im gezeigten Beispiel von dem ersten Vakuumtransportband 110 auf und über die Schneidauflage gefördert.

Anschließend werden die MEA 1, die jeweils zumindest einen Teil der ersten und der zweiten MEA-Komponente umfassen, von dem ersten Vakuumförderband 110 und/oder der Schneidauflage auf ein zweites Vakuumförderband 120 angeordnet oder transportiert. Das zweite Vakuumtransportband 120 hat zum ersten Vakuumtransportband einen Abstand von etwa 1 cm, sodass die die MEA-Komponentenabschnitte über die Schneidauflage von dem ersten Vakuumtransportband 110 unmittelbar auf das zweite Vakuumtransportband zugeführt werden können. In anderen, nicht gezeigten Ausführungsformen können jedoch auch beliebige andere Abstände zwischen dem ersten und zweiten Vakuumtransportband realisiert werden, wobei diese nicht gezeigten Ausführungsformen alle sonstigen Merkmale der hier gezeigten Ausführungsform aufweisen.

Das zweite Vakuumtransportband 120 fördert die MEA 1 in einer Ausführungsform mit einer höheren Geschwindigkeit als das erste Vakuumtransportband 110. Dies vergrößert einen Abstand zwischen den jeweils geförderten MEA 1. In einer nicht gezeigten Weiterbildung der Herstellungsanordnung 1000 können die MEA 1 weiter eine Laminationsvorrichtung durchlaufen oder durch eine Laminationsvorrichtung hindurchbefördert werden. Die Laminationsvorrichtung kann insbesondere Laminationswalzen aufweisen, die die MEA-Komponenten aneinander anpressen.

Weiter umfasst die Herstellungsanordnung 1000 eine Bereitstellungsvorrichtung für die gezeigten Trägerboxen 3. Die Bereitstellungsvorrichtung ist zur Bereitstellung und zum Transport der Trägerboxen eingerichtet und umfasst hierzu die Transportbänder 130 und 140. Die Trägerboxen 3 sind jeweils dazu eingerichtet, zumindest eine auszuhärtende MEA vom zweiten Vakuumtransportband 120 aufzunehmen. Das zweite Vakuumtransportband 120 ist dazu eingerichtet, jeweils eine auszuhärtende MEA 1 in einer jeweils an dem zweiten Vakuumtransportband vorbeigeführten Trägerbox 3 anzuordnen. Die Transportbänder 130 und 140 können in einer Weiterentwicklung ebenfalls Vakuumtransportbänder sein.

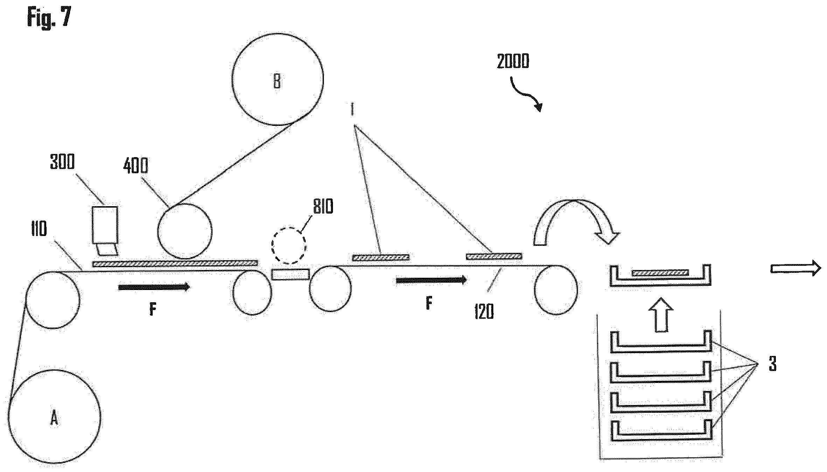

Wie in der Fig. 7 gezeigt, kann eine alternative Herstellungsanordnung 2000 auch eine Bereitstellungsvorrichtung aufweisen, die die Trägerboxen 3 auch unmittelbar hinter oder neben dem zweiten Vakuumtransportband 120 bereitstellt oder zuführt, sodass das zweite Vakuumtransportband 120 jeweils eine MEA 1 in eine von der Bereitstellungsvorrichtung bereitgestellte Trägerbox anordnen kann. Andere, nicht gezeigte, Ausführungsformen können auch Vakuumgreifer und/oder weitere Transportvorrichtungen umfassen, die die MEA 1 in die Trägerboxen befördern und/oder in den Trägerboxen anordnen.

Wie weiter mit der Fig. 6 gezeigt, umfasst die Herstellungsanordnung 1000 zusätzlich ein weiteres Transportband 150, dass dazu eingerichtet ist, die Trägerboxen 3 mit den jeweils darin angeordneten auszuhärtenden MEA 1 aufzunehmen und in einem Magazin, zum Beispiel in einem Stapelmagazin, anzuordnen. Dieses ist jedoch nicht in allen Ausführungsformen zwingend notwendig. In der in der Fig. 7 gezeigten Ausführungsform und in anderen, nicht gezeigten, Varianten können die Trägerboxen 3 auch ohne den Transport durch ein weiteres Transportband 150 in ein Magazin angeordnet werden. Das Transportband 150 kann ebenfalls ein Vakuumtransportband sein.

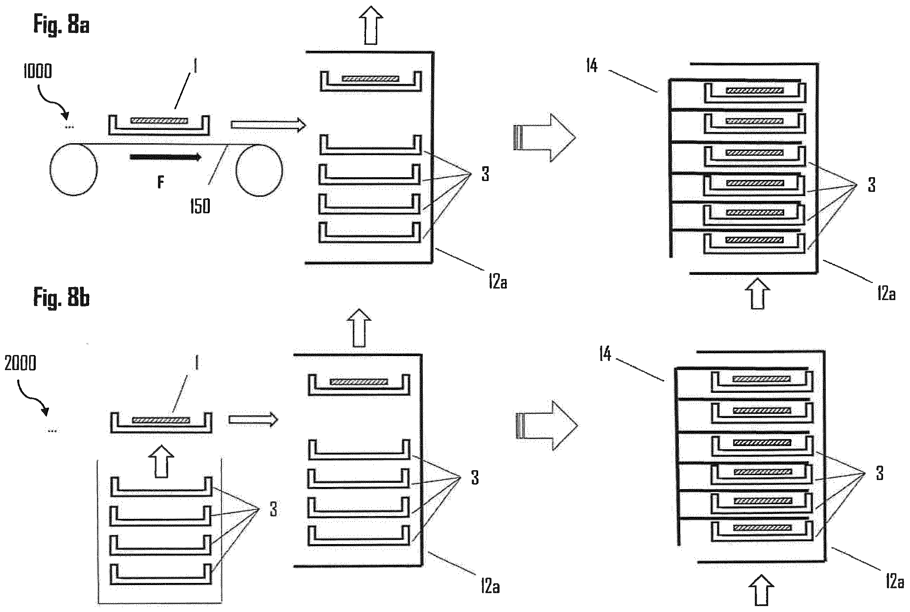

Die Figuren 8a und 8b zeigen jeweils die Anordnung der Trägerboxen 3 mit den jeweils darin angeordneten auszuhärtenden MEA 1 in einem Stapelmagazin 12a. Fig. 8a zeigt, dass die Trägerboxen 3 mit den MEA 1, zum Beispiel wie in der Fig. 6 gezeigt, von einem Transportband 150 zu dem verfahrbaren oder beweglichen Stapelmagazin 12a gefördert werden können, welches dazu eingerichtet ist, die Trägerboxen 3 jeweils zueinander beabstandet aufzunehmen. Fig. 8b zeigt, dass die Trägerboxen 3 alternativ auch, wie zum Beispiel in der Fig. 7 gezeigt, unmittelbar von der Bereitstellungsvorrichtung in ein Stapelmagazin 12a gefördert und angeordnet werden können. Auch das in der Fig. 8b gezeigte Stapelmagazin 12a ist dazu angeordnet und ausgebildet, mehrere Trägerboxen 3 aufzunehmen und relativ zu der Bereitstellungsvorrichtung bewegt zu werden.

Nachdem das Stapelmagazin 12a zumindest teilweise oder vollständig mit Trägerboxen 3 befüllt ist, wird es mit einem dem Stapelmagazin 12a zugeordneten Verfahrmechanismus (nicht gezeigt) zu einer Aushärtungsvorrichtung 14 gefördert und zumindest teilweise in der Aushärtungsvorrichtung 14 angeordnet. Die Aushärtungsvorrichtung 14 ist dazu eingerichtet, die in den Trägerboxen 3 angeordneten MEA 1 zu erwärmen und umfasst zudem mehrere Anpressplatten. Das Stapelmagazin 12a mit den zueinander beabstandet aufgenommenen Trägerboxen 3 wird so in die Aushärtungsvorrichtung 14 eingeführt, dass die in den Trägerboxen aufgenommenen MEA durch eine anschließende Relativbewegung des Stapelmagazins und/oder der Aushärtungsvorrichtung jeweils in Anlage oder in Berührung mit den Anpressplatten der Aushärtungsvorrichtung 14 gelangen. Durch eine weitere Relativbewegung des Stapelmagazins und/oder der Aushärtungsvorrichtung kann so ein Anpressdruck auf die jeweiligen MEA ausgeübt werden, welcher das Aushärten der erwärmten MEA weiter befördert.

In einer nicht gezeigten Weiterbildung können die Anpressplatten der Aushärtungsvorrichtung auch unabhängig voneinander verfahrbar oder beweglich sein, sodass ein Anpressdruck auch individuell für jede MEA 1 und/oder Trägerbox 3 ausgeübt werden kann. Die Aushärtungsvorrichtung und/oder das Stapelmagazin können hierzu (Druck-) Sensoren und/oder eine Regellogik in Form eines integrierten Schaltkreises aufweisen.

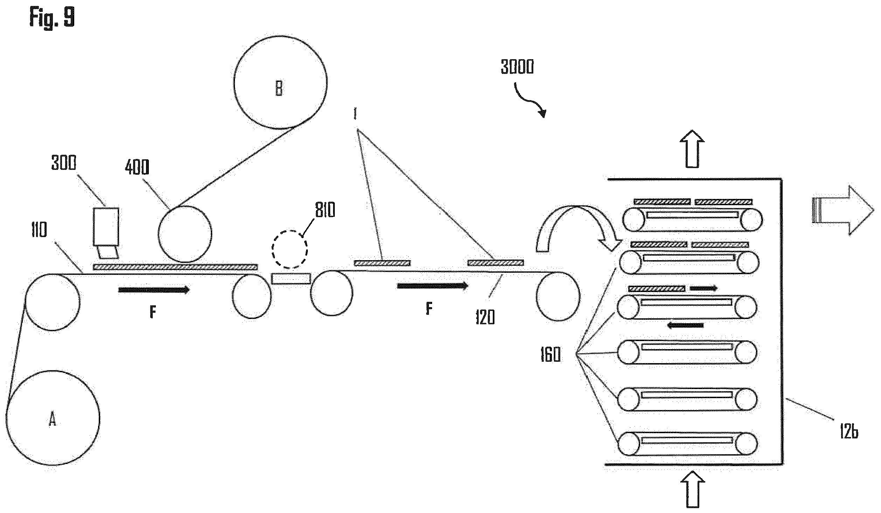

Wie weiter mit der Fig. 9 gezeigt, können in einer alternativen Herstellungsanordnung 3000 die Aufnahmeelemente 160 für die MEA 1 auch unmittelbar gemeinsam mit einem Stapelmagazin 12b bereitgestellt werden, wobei das zweite Vakuumtransportband 120 jeweils dazu eingerichtet ist, eine oder mehrere MEA 1 auf den Aufnahmeelementen 160 des Stapelmagazins 12b anzuordnen. Andere, nicht gezeigte, Ausführungsformen können hierzu weiter Vakuumgreifer und/oder weitere Transportvorrichtungen umfassen, die die MEA 1 auf den Aufnahmeelementen 160 anordnen.

Wie in der Fig. 9 gezeigt, können die Aufnahmeelemente 160 gemeinsam mit dem Stapelmagazin 12b bereitgestellt werden und/oder in das Stapelmagazin 12b integriert sein, wobei die Aufnahmeelemente 160 jeweils zueinander beabstandet und zu einem Zusammenwirken mit einer Aushärtungsvorrichtung 14 eingerichtet sind. Die in der Fig. 9 gezeigten Aufnahmeelemente 160 umfassen umlaufende Transportbänder, die eine Anordnung jeweils mehrerer MEA 1 auf einem der Aufnahmeelemente160 ermöglichen. Ein für alle Aufnahmeelemente 160 gemeinsamer Transportbandantrieb ist in das Stapelmagazin 12b integriert (nicht gezeigt). Die Transportbänder der Aufnahmeelemente 160 können Vakuumtransportbänder sein. Weiter umfassen die Aufnahmeelemente 160 jeweils eine Gegenpressplatte. Die Gegenpressplatten ermöglichen oder verbessern die Ausübung eines Anpressdrucks auf die MEA 1, wenn diese jeweils zwischen den Anpressplatten einer Aushärtungsvorrichtung und dem Aufnahmeelemente 160 mit den umlaufenden Transportbändern angeordnet sind.

Nachdem das Stapelmagazin 12b mit den Aufnahmeelementen 160 zumindest teilweise oder vollständig mit MEA 1 befüllt ist, wird es mit einem dem Stapelmagazin 12b zugeordneten Verfahrmechanismus (nicht gezeigt) zu einer Aushärtungsvorrichtung 14 bewegt und zumindest teilweise in der Aushärtungsvorrichtung 14 angeordnet.

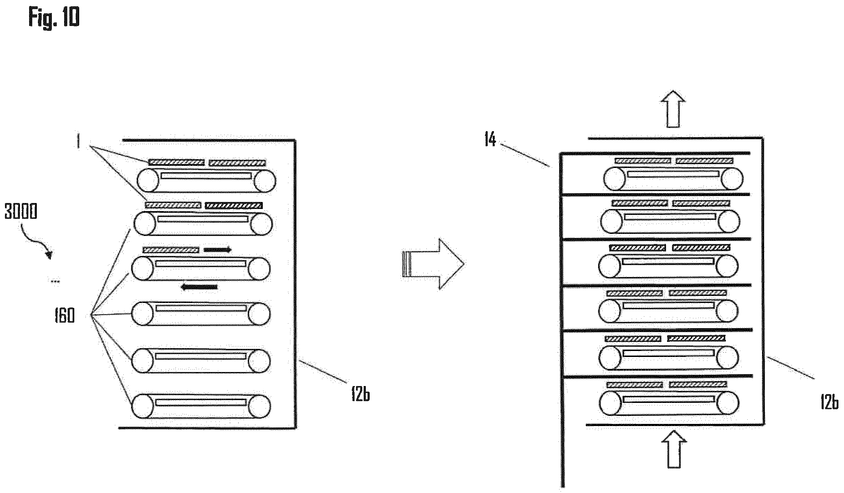

Wie in der Fig. 10 gezeigt, ist die Aushärtungsvorrichtung 14 dazu eingerichtet, die auf den Aufnahmeelementen 160 angeordneten MEA 1 zu erwärmen und umfasst zudem mehrere Anpressplatten. Das Stapelmagazin 12b mit den zueinander beabstandet aufgenommenen MEA 1 wird so in die Aushärtungsvorrichtung 14 eingeführt, dass die auf den Aufnahmeelementen 160 aufgenommenen MEA durch eine anschließende Relativbewegung des Stapelmagazins und/oder der Aushärtungsvorrichtung jeweils in Anlage oder in Berührung mit den Anpressplatten der Aushärtungsvorrichtung 14 gelangen. Durch eine weitere Relativbewegung des Stapelmagazins und/oder der Aushärtungsvorrichtung kann ein Anpressdruck auf die jeweiligen MEA 1 ausgeübt werden, welcher das Aushärten der erwärmten MEA weiter verbessert/beschleunigt. Die Gegenpressplatten der Aufnahmeelemente 160 verhindern hierbei, dass die umlaufenden Transportbänder der Aufnahmeelemente 160 dem durch die Anpressplatten ausgeübten Anpressdruck elastisch nachgeben oder vermindern ein solches elastisches Nachgeben zumindest. In einer nicht gezeigten Weiterbildung können die Anpressplatten der Aushärtungsvorrichtung auch unabhängig voneinander verfahrbar oder beweglich sein, sodass ein Anpressdruck auch individuell für jede MEA 1 und/oder für jedes Aufnahmeelement 160 ausgeübt werden kann. Die Aushärtungsvorrichtung und/oder das Stapelmagazin können hierzu (Druck-) Sensoren und/oder eine Regellogik in Form eines integrierten Schaltkreises aufweisen.

Die vorangehend beschriebenen Varianten dienen lediglich dem besseren Verständnis der Struktur, der Funktionsweise und der Eigenschaften der hier offenbarten Gegenstände; sie schränken die Offenbarung nicht etwa auf die Ausführungsbeispiele ein. Die Fig.en sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei können jede Funktionsweise, jedes Prinzip, jede technische Ausgestaltung und jedes Merkmal, welches/welche in den Fig.en oder im Text offenbart ist/sind, mit allen Ansprüchen, jedem Merkmal im Text und in den anderen Fig.en, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig.en umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Eine Vorrichtung zur Verarbeitung einer Membran-Elektroden-Anordnung, MEA, umfassend
zumindest eine Bereitstellungsvorrichtung, die zur Bereitstellung und/oder zum Transport von MEA-Aufnahmeelementen eingerichtet ist, wobei die MEA-Aufnahmeelemente jeweils zur Aufnahme einer MEA eingerichtet sind,
zumindest eine MEA-Zuführungsvorrichtung, die dazu eingerichtet ist, jeweils eine MEA in oder auf einem MEA-Aufnahmeelement anzuordnen,
zumindest ein Magazin, dass zur Aufnahme der MEA-Aufnahmeelemente mit den darin oder darauf angeordneten MEA eingerichtet ist, und
eine Aushärtungsvorrichtung, die dazu eingerichtet ist, das zumindest eine Magazin zumindest teilweise aufzunehmen und die in oder auf den MEA-Aufnahmeelementen angeordneten MEA auszuhärten.

2. Eine Vorrichtung nach dem Anspruch 1, wobei
das Magazin mehrere um eine gemeinsame Rotationsachse schwenkbare MEA-Aufnahmeelemente umfasst, die jeweils dazu eingerichtet sind, jeweils zumindest eine MEA aufzunehmen, wobei
das Magazin weiter dazu eingerichtet ist, eine von einem schwenkbaren MEA-Aufnahmeelement aufgenommene MEA jeweils mit einem weiteren schwenkbaren MEA-Aufnahmeelement in Anlage zu bringen, sodass die MEA zwischen zwei um eine gemeinsame Rotationsachse schwenkbaren MEA-Aufnahmeelementen angeordnet ist.

3. Eine Vorrichtung nach dem Anspruch 1, wobei
das Magazin ein Stapelmagazin ist, welches zu einem Zusammenwirken mit der Aushärtungsvorrichtung eingerichtet ist, und/oder
die Aushärtungsvorrichtung Anpressplatten aufweist, die dazu eingerichtet sind, zumindest teilweise mit auf oder in den MEA-Aufnahmeelementen des Stapelmagazins angeordneten MEA in Anlage gebracht zu werden und/oder an auf oder in den MEA-Aufnahmeelementen des Stapelmagazins angeordneten MEA angepresst zu werden.

4. Vorrichtung nach einem der vorangegangenen Ansprüche, wobei die MEA-Aufnahmeelemente
- zumindest eine MEA-Trägerbox, und/oder
- zumindest eine MEA-Trägerplatte, insbesondere eine Bipolarplatte, und/oder
- zumindest ein umlaufendes Förderband, und/oder
- zumindest einen Förderbandantrieb,
umfassen.

5. Vorrichtung nach einem der Ansprüche 3 oder 4, wobei
das zumindest eine Stapelmagazin
- einen Förderbandantrieb umfasst, der zum Antrieb von umlaufenden Förderbändern verschiedener MEA-Aufnahmeelemente eingerichtet ist, und/oder
- einen Verfahrmechanismus umfasst, der dazu eingerichtet ist, das Stapelmagazin relativ zu der MEA-Zuführungsvorrichtung und/oder relativ zu der Aushärtungsvorrichtung zu bewegen.

6. Vorrichtung nach einem der vorangegangenen Ansprüche, wobei
die Aushärtungsvorrichtung dazu eingerichtet ist, die MEA zu erhitzen und/oder einen Anpressdruck auf die MEA auszuüben.

7. Vorrichtung nach einem der vorangegangenen Ansprüche, wobei die MEA-Aufnahmeelemente weiter jeweils eine Isolationslage aufweisen.

8. Vorrichtung nach einem der vorangegangenen Ansprüche, wobei
die zumindest eine MEA-Zuführungsvorrichtung weiter dazu eingerichtet ist, jeweils mehrere MEA in oder auf einem MEA-Aufnahmeelement anzuordnen, und/oder
die zumindest eine MEA-Zuführungsvorrichtung weiter dazu eingerichtet ist, jeweils eine Zwischenschicht zwischen zwei MEA in oder auf einem MEA-Aufnahmeelement anzuordnen.

9. Ein Verfahren zur Verarbeitung einer Membran-Elektroden-Anordnung, MEA, umfassend die folgenden Schritte:
- Bereitstellen und/oder Transportieren von MEA-Aufnahmeelementen mit zumindest einer Bereitstellungsvorrichtung, wobei die MEA-Aufnahmeelemente jeweils zur Aufnahme einer MEA eingerichtet sind,
- Anordnen jeweils einer MEA in oder auf einem MEA-Aufnahmeelement mit zumindest einer MEA-Zuführungsvorrichtung;
- Aufnehmen der MEA-Aufnahmeelemente mit den darin oder darauf angeordneten MEA in zumindest ein Magazin; und
- zumindest teilweises Aufnehmen des Magazins in einer Aushärtungsvorrichtung und Aushärten der in oder auf den MEA-Aufnahmeelementen angeordneten MEA mit der Aushärtungsvorrichtung.
